# EUROPÄISCHE PATENTSCHRIFT

(11) **EP 0 956 469 B1**
(45) Veröffentlichungstag und Bekanntmachung des Hinweises auf die Patenterteilung: **04.12.2002**
(21) Anmeldenummer: 98904096.9
(22) Anmeldetag: 19.01.1998
(51) Int. Cl.: F16K 17/38

(54) **PASSIVER IMPULSGEBER UND VERFAHREN ZUM ANSTEUERN EINER ARMATUR MITTELS EINES PASSIVEN IMPULSGEBERS**
PASSIVE PULSE GENERATOR AND METHOD FOR CONTROLLING AN INSTRUMENT VIA A PASSIVE PULSE GENERATOR
GENERATEUR D'IMPULSIONS PASSIF ET PROCEDE DE CONTROLE D'ACCESSOIRES DE TUYAUTERIE AU MOYEN D'UN TEL GENERATEUR

(30) Priorität: 31.01.1997 DE 19703660
(43) Veröffentlichungstag der Anmeldung: 17.11.1999
(73) Patentinhaber: Framatome ANP GmbH, 91050 Erlangen (DE)
(72) Erfinder: ZEITZSCHEL, Günter, D-60431 Frankfurt am Main (DE)
(74) Vertreter: Tergau & Pohl Patentanwälte
(86) Internationale Anmeldenummer: EP9800263
(87) Internationale Veröffentlichungsnummer: WO98034055

(56) Entgegenhaltungen:
- EP-A- 0 058 451
- DE-A- 3 500 662
- GB-A- 2 209 200

## Beschreibung

Die Erfindung bezieht sich auf einen passiven Impulsgeber und ein Verfahren zum Ansteuern einer sicherheitstechnischen Armatur in einer Kernkraftanlage.

Bei einer beispielsweise mit einem Druck- oder Siedewasserreaktor ausgestatteten Kernkraftanlage wird in einem Reaktorsicherheitsbehälter in einem geschlossenen Kreislauf einem Reaktordruckbehälter kaltes Kühlmittel zu- bzw. erhitztes Kühlmittel abgeführt. Das Kühlmittel wird durch die im Reaktordruckbehälter ablaufenden Kernprozesse erhitzt. Die dabei vom Kühlmittel aufgenommene Wärmeenergie dient zur Erzeugung von elektrischer Energie. Das erhitzte Kühlmittel wird dabei und durch Wärmetauschprozesse abgekühlt und dem Reaktordruckbehälter wieder zugeführt. Ein Leck in diesem geschlossenen Kühlkreislauf führt zu einer Verringerung des Kühlmittels und damit zu einem Temperaturanstieg in dem Reaktordruckbehälter. Ein Temperaturanstieg im Reaktordruckbehälter führt automatisch auch zu einem Temperaturanstieg beispielsweise in einer Kondensationskammer, mit der der Reaktordruckbehälter aus sicherheitstechnischen Aspekten in Verbindung steht. Gegenwärtig wird allerdings ein kleines Leck in dem Kühlkreislauf nicht erkannt. Der auftretende Kühlmittelverlust wird vielmehr automatisch über eine Füllstandsregelung für den Reaktordruckbehälter aus bestehenden Kühlmittelreservoirs ausgeglichen. Bei einem eventuell auftretenden größeren Kühlmittelverluststörfall bildet sich in diesem Falle jedoch im Reaktorsicherheitsbehälter eine Temperatur aus, die um die Temperaturerhöhung infolge eines Lecks erhöht ist.

Aus der FR 26 90 219 A1 ist eine Schmelzsicherung bekannt, die bei Übersteigen einer Temperatur ein Ventil freigibt. Der Nachteil einer Schmelzsicherung besteht darin, daß sie nur einmal zur Verfügung steht und nach Gebrauch durch eine neue ersetzt werden muß.

Aus der GB 2 209 200 A ist ein thermisches Schließventil bekannt, das insbesondere in der Haustechnik aus Brandschutzgründen bei Gasleitungen eingesetzt wird, in welchen ein leicht entflammbares oder explosives Gas strömt. Das Schließventil verschließt bei überschreiten einer bestimmten Temperatur die Gasleitung sicher und dauerhaft. Hierzu ist eine spezielle Feder vorgesehen, durch deren thermische Ausdehnung bei einer Temperaturerhöhung ein Schließen der Gasleitung bewirkt wird. Die Feder ist speziell ausgestaltet, so daß die Gasleitung auch dann noch verschlossen bleibt, wenn die Temperatur wieder fallt. Die Feder geht bei einer Temperaturerniedrigung also nicht in ihre Ausgangslage zurück. Sie muß vielmehr durch eine neue Feder ersetzt werden, damit das Schließventil wieder funktionsfähig ist.

Aufgabe der Erfindung ist es, einen reversibel arbeitenden Impulsgeber anzugeben, der auf eine Temperaturanderung reagiert. Der Erfindung liegt weiterhin die Aufgabe zugrunde, ein Verfahren anzugeben, bei dem infolge einer Temperaturveränderung ein Steuerimpuls für eine Armatur freigegeben wird.

Die erstgenannte Aufgabe wird erfindungsgemäß durch einen passiven Impulsgeber gemäß Patentanspruch 1 gelöst. Der Impulsgeber ist zum Ansteuern einer sicherheitstechnischen Armatur in einer Kernkraftanlage an eine beispielsweise druckführende Leitung anschließbar und umfaßt zum reversiblen Öffnen oder Verschließen dieser Leitung ein Verschlußelement, das durch eine Krafteinwirkung eines ersten Stellelements betatigbar ist, wobei die Krafteinwirkung durch dessen thermische Volumenänderung erzeugt ist. Es ist eine Arretierung vorgesehen, die erst bei Überschreiten eines vorgebbaren Werts der Krafteinwirkung die Betatigung des Verschlußelements durch das erste Stellelement freigibt.

Bei einer Temperaturanderung in der Umgebung des Impulsgebers führt also die Expansion oder die Kontraktion des ersten Stellelementes dazu, daß das Verschlußelement die druckführende Leitung beispielsweise freigibt. Das in der Leitung befindliche Medium, beispielsweise Druckluft, kann dann als Signal für eine nachgeschaltete Armatur verwendet werden. Dieser Vorgang ist reversibel, so daß der Impulsgeber beliebig oft ein Signal weiterleiten kann, um weitere Schritte z.B. zur Behebung eines Kühlmittelverlustes in einem Reaktorsicherheitsbehälter einzuleiten. Die Arretierung ist derart ausgestaltet, daß der Wert der Krafteinwirkung eingestellt werden kann, ab dem die Arretierung gelöst werden soll. Damit kann indirekt die Temperatur eingestellt werden, ab der der Impulsgeber auslöst und ein Signal weiterleitet. Ein wesentlicher Punkt für die sicherheitstechnischen Anforderungen in einer Kernkraftanlage ist die passive Funktionsweise des Impulsgebers. Der Impulsgeber übermittelt allein aufgrund einer Temperaturänderung in der Umgebung ein Signal an eine nachgeschaltete Armatur. Es sind keine sonstigen externen Steuersignale, beispielsweise elektrische Steuersignale, nötig. Der passive Impulsgeber ist daher selbst bei einem kompletten Stromausfall voll funktionstüchtig.

Vorrichtungen, die im Prinzip ähnliche Merkmale wie der Impulsgeber aufweisen, sind in verschiedenen Ausführungen, beispielsweise aus der DE 195 17 655 A1 oder aus der DE 40 21 580 C1, bekannt. Sie werden beispielsweise in der Heizungstechnik als Thermostate eingesetzt. Diese Thermostate oder Ventile unterscheiden sich jedoch prinzipiell von dem Impulsgeber sowohl hinsichtlich ihrer Funktion als auch hinsichtlich ihrer konstruktiven Ausgestaltung. Sie sind daher keinesfalls für den Einsatz in den hochsensiblen sicherheitstechnischen Bereichen einer Kernkraftanlage zum Ansteuern einer Armatur und auch nicht zur Lösung von kraftwerksspezifischen Aufgaben geeignet.

In einer vorteilhaften Ausgestaltung ist das erste Stellelement als ein Memory-Druckelement ausgestaltet. Der Vorteil eines Memory-Druckelementes ist darin zu sehen, daß seine thermische Volumenänderung im wesentlichen erst ab einer bestimmten Temperatur, dann jedoch nahezu sprunghaft einsetzt. Mit einem solchen Memory-Druckelement kann daher die Temperatur eingestellt werden, ab der der Impulsgeber auslösen soll.

Vorteilhafterweise wird bei dem Impulsgeber durch die Arretierung das erste Stellelement in einer Grundstellung gehalten. Das Verschlußelement wird daher erst einer Krafteinwirkung ausgesetzt, wenn der vorgegebene Wert für die Temperatur überschritten ist. Dies erhöht die Betriebsicherheit und verhindert ein vorzeitiges Auslösen des Impulsgebers.

Zum gleichen Zwecke ist es dienlich, wenn das Verschlußelement über ein zweites Stellelement mit einer einstellbaren Verschlußkraft verschließbar ist.

Die zweitgenannte Aufgabe wird erfindungsgemäß gelöst durch ein Verfahren zum Ansteuern einer sicherheitstechnischen Armatur in einer Kernkraftanlage mittels eines passiven Impulsgebers, der ein Signal an die Armatur übermittelt und hierzu an eine druckführende Leitung angeschlossen ist. Zum reversiblen Öffnen oder Verschließen der druckführenden Leitung wird bei dem Impulsgeber ein Verschlußelement durch eine Krafteinwirkung eines ersten Stellelements, hervorgerufen durch dessen thermische Volumenänderung, betätigt. Eine Arretierung gibt dabei erst ab Überschreiten eines vorgebbaren Werts der Krafteinwirkung die Betätigung des Verschlußelements frei.

Es ist insbesondere von Vorteil, einen Impulsgeber wie oben beschrieben in einer Druck- und/oder einer Kondensationskammer einer Kernkraftanlage anzuordnen, um die infolge eines Kühlmittelverlustes erhöhte Temperatur im Reaktorsicherheitsbehälter und somit auch in der Druck- oder Kondensationskammer feststellen zu können. Besonders vorteilhaft ist es im Hinblick auf sicherheitstechnische Aspekte für den Betrieb einer Kernkraftanlage, daß der Impulsgeber passiv ausgelöst wird. Der Impulsgeber gibt also ab einer bestimmten erhöhten Temperatur die druckführende Leitung frei, ohne zusätzliche Steuerungsimpulse zu benötigen.

Die Erfindung wird im folgenden anhand der Ausführungsbeispiele der Zeichnung näher erläutert. Es zeigen:
- FIG 1: schematisch die konstruktive Ausgestaltung eines Impulsgebers
- FIG 2: die Anordnung des Impulsgebers in einer Kernkraftanlage in einem grob vereinfachten Schaltbild.

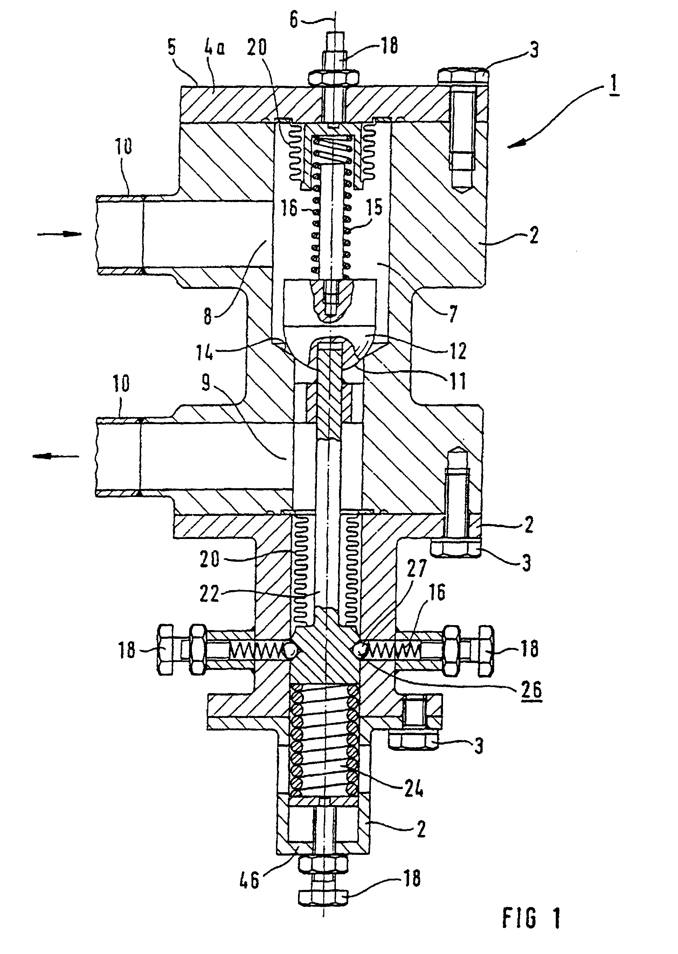

Gemäß der FIG 1 weist der Impulsgeber 1 ein Gehäuse 2 auf, das mehrere Gehäuseteile umfaßt, die über Schraubverbindungen 3 miteinander verbunden sind. Das Gehäuse 2 ist an einer ersten Stirnseite 4a von einem Gehäusedeckel 5 begrenzt, der über eine Schraubverbindung 3 an das Gehäuse 2 befestigt ist. Im Innern weist das Gehäuse 2 entlang seiner Längsachse 6 und zwischen seiner ersten und einer zweiten Stirnseite 4a, 4b einen Hohlraum 7, beispielsweise einen zylinderförmiger Hohlraum 7 auf. Das Gehäuse 2 weist desweiteren eine erste Öffnung 8 und eine in Richtung der Längsachse 6 nachfolgende zweite Öffnung 9 auf, die jeweils mit dem Hohlraum 7 in Verbindung stehen, so daß eine an den Impulsgeber 1 anschließbare Leitung 10 mit dem Hohlraum 7 über die erste und zweite Öffnung 8, 9 in Verbindung steht. In anderen Worten: Der Impulsgeber 1 ist in diesem Falle in der Leitung 10 angeordnet, d.h. der Impulsgeber 1 ist zwischen zwei Leitungsabschnitten der Leitung 10 angeordnet. Zumindest ein Teil des Hohlraumes 7 kann daher auch als ein Leitungsabschnitt der Leitung 10 betrachtet werden.

In einer ersten, zum Gehäusedeckel 5 hin orientierten Hälfte des Gehäuses 2 ist im Hohlraum 7 ein Verschlußelement 11 zum Verschließen oder Öffnen des Hohlraumes 7 zwischen der ersten Öffnung 8 und der zweiten Öffnung 9 angeordnet, d.h. zum Verschließen oder Öffnen der Leitung 10 oder in anderen Worten: Zum Verschließen oder Öffnen des von dem Hohlraum 7 gebildeten Leitungsabschnittes der Leitung 10. Das Verschlußelement 11 oder auch der gesamte Impulsgeber 1 kann daher auch als Ventil für die Leitung 10 angesehen werden. Im Ausführungsbeispiel der FIG 1 umfaßt das Verschlußelement 11 eine Dichtkugel 12 und einen Sitz 14, in dem sich die Dichtkugel 12 bei verschlossener Grundstellung befindet. Die Dichtkugel 12 des Verschlußelementes 11 wird über ein zweites Stellelement 15 in ihrer Verschlußstellung gehalten. Gemäß der FIG 1 ist das zweite Stellelement 15 eine Druckfeder 16, die gegen den Gehäusedeckel 5 abgestützt ist. Über eine durch den Gehäusedekkel 5 hindurch reichende Stellschraube 18 kann die Vorspannung der Druckfeder 16 eingestellt werden. Die durch die Stellschraube 18 bedingte Öffnung im Gehäusedeckel 5 wird über einen Kompensator 20 - im Ausführungsbeispiel ein Faltenbalg - gasdicht abgedichtet. Anstatt der Druckfeder 16 ist beispielsweise auch ein Gasdruckelement oder ein hydraulisches Druckelement einsetzbar.

In der zweiten Hälfte des Gehäuses 2, die der zweiten Stirnseite 4b zugewandt ist, ist in dem Hohlraum 7 ein temperatursensitives erstes Stellelement 24, beispielsweise eine Feder angeordnet. Dieses erste Stellelement 24 reagiert auf eine Temperaturänderung mit einer Volumenänderung, so daß sich das erste Stellelement 24 in dem Hohlraum 7 relativ zu dem Gehäuse 2 bewegt. Diese reversible Bewegung, d.h. Kontraktion des Stellelementes 24 bei einer Temperaturerniedrigung und Expansion bei einer Temperaturerhöhung, wird zum Öffnen oder Verschließen des Verschlußelementes 11 beispielsweise über eine Stange 22 auf die Dichtkugel 12 des Verschlußelementes 11 übertragen. Über eine durch die zweite Stirnseite 4b des Gehäuses 2 hindurch reichende Stellschraube 18 kann die Vorspannung des ersten Stellelementes 24 eingestellt werden. Zwischen dem ersten Stellelement 24 und dem Verschlußelement 11 ist eine auf die Stange 22 wirkende Arretierung 26 angeordnet. Die Arretierung 26 umfaßt gemäß Figur 1 Druckfedern 16, die jeweils eine Kugel 27 in eine dafür vorgesehene Aussparung in der Stange 22 drücken. Die Vorspannung der Druckfeder 16 kann ebenfalls jeweils über eine seitlich am Gehäuse 2 angeordnete Stellschraube 18 eingestellt werden.

Die erste Öffnung 8 mündet also zwischen dem Verschlußelement 11 und dem Gehäusedeckel 5 und die zweite Öffnung 9 mündet zwischen dem Verschlußelement 11 und dem ersten Stellelement 24 in den Hohlraum 7. Zwischen den beiden Öffnungen 8,9, an die die Leitung 10 angeschlossen ist, ist das Verschlußelement 11 angeordnet. Bei geöffnetem Verschlußelement, d.h. wenn sich die Dichtkugel 12 in einer Offen-Stellung befindet, kann daher ein fluides Medium, beispielsweise Druckluft, über die Leitung 10 durch die Steuerarmatur 1 hindurchströmen. Um ein unerwünschtes Austreten des fluiden Mediums aus dem Impulsgeber 1 zu vermeiden, ist zwischen dem Verschlußelement 11 und dem ersten Stellelement 24 unterhalb der Leitung 10 der Hohlraum 7 über einen Kompensator 20 - im Ausführungsbeispiel ein Faltenbalg - zum ersten Stellelement 24 hin gasdicht abgedichtet.

Der Impulsgeber 1 wird vorteilhafterweise in einer Kammer angeordnet, um eine Temperaturerhöhung in dieser Kammer erfassen zu können und über die druckführende Leitung 10 ein Signal an eine nachgeschaltete Einheit zu übermitteln. Infolge der Ausdehnung oder Kontraktion des ersten Stellelementes 24 bei einer Temperaturerhöhung bzw. Temperaturerniedrigung wirkt eine Kraft auf die Dichtkugel 12. Steigt beispielsweise die Temperatur in der Kammer, so dehnt sich das erste Stellelement 24 aus und öffnet das Verschlußelement 11, d.h. es löst infolge der bei der Ausdehnung über die Stange 22 hergestellten kraftschlüssigen Verbindung zwischen dem ersten Stellelement 24 und der Dichtkugel 12 diese von ihrem Sitz 14, so daß die druckführende Leitung 10 freigegeben ist und Druckluft durch diese Leitung 10 strömen kann. Der Impulsgeber 1 kann daher als ein temperatursensitiver passiver Impulsgeber 1 bezeichnet werden, der bei einer Temperaturänderung in seiner Umgebung passiv, d.h. ohne externen Steuereinfluß einen Impuls an eine nachgeschaltete Einheit weitergibt.

Damit die Steuerarmatur 1 erst bei einer festgelegten Temperatur die Leitung 10 freigibt, kann die Kraft eingestellt werden, die nötig ist, um das Verschlußelement 11 zu öffnen. Über die einstellbare Kraft wird indirekt die Temperatur eingestellt, ab der der Impulsgeber 1 auslösen soll. Hierzu wird zum einen die Dichtkugel 12 durch eine Druckfeder 16, deren Vorspannung sich über eine Stellschraube 18 einstellen läßt, in ihren Sitz 14 gepreßt. Zum anderen wird die für das Lösen der Arretierung 26 notwendige Kraft mit auf die Kugeln 27 wirkenden Druckfedern 16 eingestellt. Die Vorspannung dieser Druckfedern 16 kann jeweils über eine Stellschraube 18 eingestellt werden. Durch diese Arretierung 26 wird das erste Stellelement 24 auch bei kleineren Temperaturschwankungen um eine unkritische Normaltemperatur in einer Grundstellung gehalten. Zusätzlich kann die Vorspannung des ersten Stellelementes 24 ebenfalls über eine Stellschraube 18 eingestellt werden.

Vorteilhafterweise wird als erstes Stellelement 24 ein Memory-Druckelement, beispielsweise eine Memory-Druckfeder, eingesetzt. Ein solches Memory-Druckelement dehnt sich erst ab einer bestimmten Temperatur merklich aus, so daß die Steuerarmatur 1 insgesamt bis zu einer gewünschten Temperatur die druckführende Leitung 10 verschließt und oberhalb dieser Temperatur die Leitung 10 schnell und weitestgehend komplett freigibt.

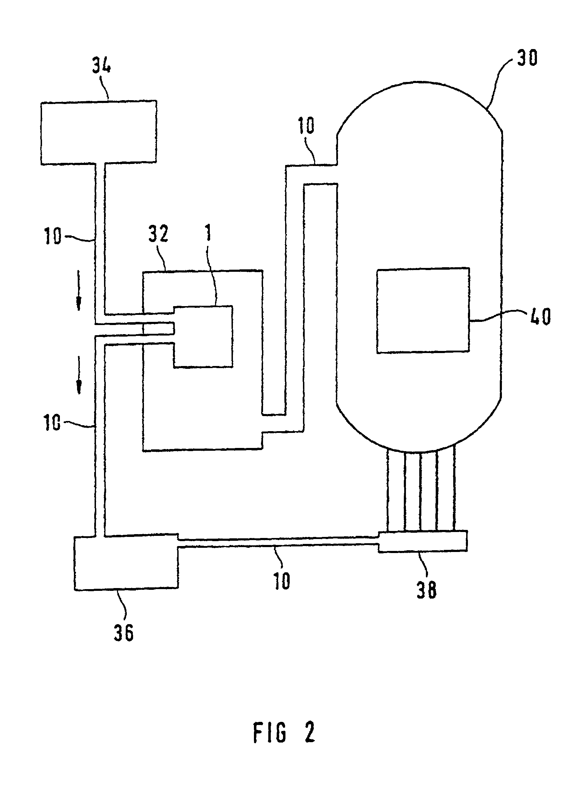

Gemäß FIG 2 ist ein Reaktordruckbehälter 30 über eine Leitung 10 mit einer Kammer, beispielsweise eine Kondensationskammer 32, verbunden. Im Innern der Kondensationskammer 32 ist ein Impulsgeber 1 angeordnet. An den Impulsgeber 1 ist eine druckführende Leitung 10 angeschlossen. Die Druckluft wird in die Leitung 10 beispielsweise aus einem Druckluftspeicher 34 eingespeist. Die Leitung 10 ist nach dem Impulsgeber 1 mit einer nachgeschalteten Einheit, beispielsweise eine Armatur 36 verbunden. In anderen Worten: der Impulsgeber 1 ist zwischen dem Druckluftspeicher 24 und der Armatur 36 geschaltet und verschließt bzw. öffnet die druckführende Leitung 10. Gibt die Steuerarmatur 1 die Leitung 10 infolge eines Temperaturanstieges in der Kondensationskammer 32 frei, so erhält die Armatur 36 ein Signal und veranlaßt daraufhin, daß die gesamte Anlage in einen sicheren Betriebszustand oder einen abgeschalteten Zustand gebracht wird. Als Beispiel hierfür ist gemäß FIG 2 die Armatur 36 über eine Leitung 10 mit dem Steuerstabantrieb 38 des Reaktordruckbehälters 30 verbunden, um die im Reaktorkern 40 erzeugte Leistung zu regulieren.

## Patentansprüche

1. Passiver Impulsgeber (1) zur Verwendung in einer Kernkraftanlage, der an eine Leitung (10) zum Ansteuern einer sicherheitstechnischen Armatur (36) in der Kernkraftanlage anschließbar ist und der zum reversiblen Öffnen oder Verschließen der Leitung (10) ein Verschlußelement (11) umfaßt, das durch Krafteinwirkung eines ersten Stellelements (24) betätigbar ist, wobei die Krafteinwirkung durch eine thermische Volumenänderung des Stellelements (24) erzeugt ist, und wobei eine Arretierung (26) vorgesehen ist, die die Betätigung des Verschlußelements (11) durch das erste Stellelement (24) freigibt, wenn die durch die thermische Volumenänderung hervorgerufene Kraft einen vorgebbaren Wert überschreitet.

2. Passiver Impulsgeber (1) nach Anspruch 1, bei dem das erste Stellelement (24) ein Memory-Druckelement ist.

3. Passiver Impulsgeber (1) nach einem der Ansprüche 1 oder 2, bei dem das erste Stellelement (24) mit der Arretierung (26) in einer Grundstellung haltbar ist.

4. Passiver Impulsgeber (1) nach einem der Ansprüche 1 bis 3, bei dem das Verschlußelement (11) über ein zweites Stelielement (15) mit einer einstellbaren Verschlußkraft verschließbar ist.

5. Verfahren zum Ansteuern einer sicherheitstechnischen Armatur (36) in einer Kernkraftanlage mittels eines passiven Impulsgebers (1), der ein Signal an die Armatur (36) übermittelt und hierzu an eine druckführende Leitung (10) angeschlossen ist, wobei bei dem Impulsgeber (1) zum reversiblen Öffnen oder Verschließen der Leitung (10) ein Verschlußelement (11) durch eine Krafteinwirkung eines ersten Stellelements (24) betätigt wird, wobei eine thermische Volumenänderung des Stellelements (24) die Krafteinwirkung erzeugt, und wobei eine Arretierung (26) die Betätigung des Verschlußelements (11) durch das erste Stellelement (24) freigibt, wenn die durch die thermische Volumenänderung hervorgerufene Kraft einen vorgebbaren Wert überschreitet.

6. Anordnung eines Impulsgebers (1) nach einem der Ansprüche 1 bis 4 in einer Druck- und/oder Kondensationskammer (32) einer Kernkraftanlage.

## Claims

1. Passive pulse generator (1) for use in a nuclear power plant, which passive pulse generator can be connected to a line (10) for controlling a safety fitting (36) in the nuclear power plant and which passive pulse generator comprises, for reversibly opening and closing the line, a sealing element (11) that can be actuated by force action of a first actuating element (24), wherein the force action is generated by a thermal volume change in the actuating element (24) and wherein a locking device (26) is provided that enables the actuation of the sealing element (11) by the first actuating element (24) if the force due to the thermal volume change exceeds a specifiable value.

2. Passive pulse generator (1) according to Claim 1, wherein the first actuating element (24) is a memory pressure element.

3. Passive pulse generator (1) according to either of Claims 1 or 2, wherein the first actuating element (24) can be held in a basic position by the locking device (26).

4. Passive pulse generator (1) according to one of Claims 1 to 3, wherein the sealing element (11) can be sealed by means of a second actuating element (15) having an adjustable sealing force.

5. Method of controlling a safety fitting (36) in a nuclear power plant by means of a passive pulse generator (1) that transmits a signal to the fitting (36) and, for this purpose, is connected to a pressure-carrying line (10), wherein a sealing element (11) is actuated by a force action of a first actuating element (24) in the pulse generator (1) for reversibly opening and closing the line (10), wherein a thermal volume change in the actuating element (24) generates the force action and wherein a locking device (26) enables the actuation of the sealing element (11) by the first actuating element (24) if the force due to the thermal volume change exceeds a specifiable value.

6. Disposal of a pulse generator (1) according to one of Claims 1 to 4 in a pressure and/or condensation chamber (32) of a nuclear power plant.

## Revendications

1. Générateur (1) passif d'impulsions, qui est destiné à être utilisé dans une centrale nucléaire, qui peut être raccordé à un conduit (10) pour la commande d'un robinet (36) de sécurité dans la centrale nucléaire et qui comprend un obturateur (11) pour ouvrir et fermer de manière réversible le conduit (10), obturateur qui peut être actionné par l'action d'une force d'un premier élément (24) d'actionnement, l'action de la force étant produite par une variation thermique de volume de l'élément (24) d'actionnement et il est prévu un arrêt (26) qui libère l'actionnement de l'obturateur (11) par le premier élément (24) d'actionnement lorsque la force provoquée par la variation thermique de volume dépasse une valeur qui peut être prescrite.

2. Générateur (1) passif d'impulsions suivant la revendication 1, dans lequel l'élément (24) d'actionnement est un élément de poussée à mémoire.

3. Générateur (1) passif d'impulsions suivant l'une des revendications 1 ou 2, dans lequel le premier élément (24) d'actionnement peut être maintenu dans une position de base par l'arrêt (26).

4. Générateur (1) passif d'impulsions suivant l'une des revendications 1 à 3, dans lequel l'obturateur (11) peut être fermé par un deuxième élément (15) d'actionnement avec une force de fermeture réglable.

5. Procédé de commande d'un robinet (36) de sécurité d'une centrale nucléaire au moyen d'un générateur (1) passif d'impulsions qui envoie un signal au robinet (36) et qui est raccordé à cet effet à un conduit (10) d'application de la pression, générateur (1) d'impulsions dans lequel un obturateur (11) peut, pour l'ouverture et la fermeture réversibles du conduit (10), être actionné par l'action d'une force d'un premier élément (24) d'actionnement, une variation thermique de volume de l'élément (24) d'actionnement produisant l'action de la force et un arrêt (26) libérant l'actionnement de l'obturateur (11) par le premier élément (24) d'actionnement lorsque la force provoquée par la variation thermique de volume dépasse une valeur qui est peut être prescrite.

6. Montage d'un générateur (1) passif d'impulsions suivant l'une des revendications 1 à 4 dans une chambre (32) sous pression et/ou dans une chambre (32) de condensation d'une centrale nucléaire.
